# FASCICULE DE BREVET EUROPEEN

(11) **EP 2 508 735 B1**
(45) Date de publication et mention de la délivrance du brevet: **06.01.2016**
(21) Numéro de dépôt: 12162425.8
(22) Date de dépôt: 30.03.2012
(51) Int. Cl.: F02C 9/00, B64D 31/12, G05D 1/02

(54) **Procédé et dispositif pour la commande du régime des moteurs d'un aéronef au cours d'une phase de décollage**
Verfahren und Vorrichtung für die Betriebssteuerung der Motoren eines Luftfahrzeugs während der Startphase
Method and device for controlling the operating speed of the engines of an aircraft during the take-off phase

(30) Priorité: 07.04.2011 FR 1153019
(43) Date de publication de la demande: 10.10.2012
(73) Titulaire: Airbus Opérations SAS, 31060 Toulouse (FR)
(72) Inventeur: Fernandez, Brice, 31100 Toulouse (FR)
(74) Mandataire: Gevers France

(56) Documents cités:
- EP-A1- 1 505 280
- EP-A1- 2 301 844
- FR-A1- 2 890 939
- US-A- 2 669 837
- US-A- 3 736 796
- US-A- 4 546 353
- US-A1- 2010 070 112
- US-A1- 2010 302 073

## Description

La présente invention concerne un procédé et un dispositif pour la commande du régime des moteurs d'un aéronef multimoteur au cours d'une phase de décollage, ainsi qu'un aéronef équipé d'un tel dispositif.

Bien que la présente invention soit particulièrement adaptée aux avions équipés de turboréacteurs, elle n'est nullement limitée à cette application. On pourrait tout aussi bien la mettre en oeuvre sur des avions pourvus de turbopropulseurs.

On sait que de tels turboréacteurs sont régulés par un paramètre fiable, appelé paramètre de conduite, représentatif du niveau de poussée desdits turboréacteurs et qu'il existe deux sortes de paramètres de conduite, dont l'un est le rapport EPR entre les pressions des gaz à la sortie et à l'entrée des turboréacteurs et l'autre est lié à la vitesse N1 de la soufflante de ces derniers.

Pour un turboréacteur déterminé, la nature du paramètre de conduite, à savoir le rapport EPR ou la vitesse N1, est fixé par le constructeur dudit turboréacteur.

Il est également connu que, préalablement au décollage, les turboréacteurs sont maintenus dans un régime de ralenti, auquel est associée une valeur de ralenti d'un tel paramètre de conduite EPR ou N1 .

Lors de l'amorce du décollage, les pilotes de l'avion, par une action volontaire sur les manettes de commande des gaz, augmentent progressivement le régime des turboréacteurs, depuis le régime de ralenti, pour atteindre un régime de décollage prédéfini auquel est associée une valeur de décollage du paramètre de conduite.

Cependant, il arrive fréquemment que, au cours du décollage, les turboréacteurs d'un avion ne présentent pas tous la même valeur courante du paramètre de conduite à un instant donné, bien que les manettes des gaz correspondantes soit dans une position identique. En effet, l'accélération de la soufflante depuis le régime de ralenti est susceptible de varier selon les turboréacteurs d'un même avion, par exemple, du fait que :
- les pièces mécaniques des différents turboréacteurs ne sont pas huilées de façon identique ;
- certains turboréacteurs de l'avion ont été changés alors que les autres sont d'origine, de sorte qu'ils ne présentent pas tous la même usure ;
- le calibrage du régime de ralenti n'est pas uniforme entre tous les turboréacteurs ;
- etc...

Cela se traduit par une dissymétrie de poussée en sortie des turboréacteurs de l'avion susceptible de conduire à une déviation latérale de celui-ci, lors de l'accélération de décollage, que les pilotes doivent impérativement corriger. Une telle déviation est en outre d'autant plus marquée que la vitesse de l'avion est peu élevée.

De tels problèmes directionnels occasionnent, pour les pilotes, une charge de travail et une vigilance supplémentaires au cours d'une phase de décollage qui nécessite déjà beaucoup d'attention de leur part.

En outre, si la correction apportée par les pilotes est inappropriée ou trop tardive, le décollage peut être interrompu perturbant ainsi le trafic au sol.

Par ailleurs, on connaît :
- par le document EP 1 505 280, un procédé et un dispositif d'alimentation des turbomoteurs d'un aéronef en vol automatique. Ce document prévoit notamment de convertir, en vol en palier à altitude stabilisée de l'aéronef, une valeur de consigne commune en une valeur de consigne liée à la vitesse de rotation de la soufflante des moteurs et d'asservir l'alimentation en carburant de tous les turboréacteurs à la valeur de consigne ;
- par le document US 2010/302073, un dispositif pour confirmer la poussée des moteurs d'un aéronef. Par l'intermédiaire d'une unité de logique de fonctionnement de chaque moteur traitant différentes informations, un indicateur d'avertissement relié à ladite unité délivre ou non une information de confirmation de poussée du niveau du poste de pilotage ;
- par le document FR 2 890 939, un procédé et un dispositif pour fournir à un pilote d'un aéronef multimoteur des informations relatives aux moteurs, notamment la poussée maximale que les moteurs peuvent fournir un jour donné sur un aéroport donné ;
- par le document US 4 546 353, un système d'alerte de poussée asymétrique sur un aéronef bimoteur ; et.
- par le document US 3 736 796, un système d'alerte pour aéronef, pour prévenir en cas de poussée insuffisante pour un décollage.

La présente invention a pour objet de remédier aux inconvénients précités et, notamment de limiter, voire de supprimer, les problèmes directionnels précités rencontrés lors d'un décollage.

A cette fin, selon l'invention, et conformément à la revendication 1, le procédé de commande du régime des moteurs d'un aéronef multimoteur au cours d'un décollage, dans lequel on détermine au préalable un régime de décollage auquel est associée une valeur de consigne de décollage commune à tous les moteurs et correspondant à une première valeur particulière d'un paramètre de conduite desdits moteurs, est remarquable :
- en ce que l'on détermine préalablement au moins une valeur de consigne intermédiaire commune à tous les moteurs et correspondant à une seconde valeur particulière du paramètre de conduite, ladite valeur de consigne intermédiaire étant strictement inférieure à la valeur de consigne de décollage ; et
- en ce que l'on effectue automatiquement les étapes suivantes :
   ■ à l'initiation du décollage, on augmente le régime desdits moteurs depuis un régime de ralenti jusqu'à un régime intermédiaire correspondant à la valeur de consigne intermédiaire déterminée, de telle sorte que le paramètre de conduite associé à chacun des moteurs atteigne ladite valeur de consigne intermédiaire ;
   ■ on mesure, pour chacun desdits moteurs, la valeur courante du paramètre de conduite associée ;
   ■ on détecte si, pour tous les moteurs, la différence entre la valeur courante du paramètre de conduite associée à chacun desdits moteurs et la valeur de consigne intermédiaire déterminée est, en valeur absolue, au plus égale à un seuil prédéfini ; et
   ■ lorsque, pour tous les moteurs, ladite différence associée est au plus égale audit seuil prédéfini, on poursuit l'augmentation du régime des moteurs jusqu'au régime de décollage déterminé, de telle sorte que le paramètre de conduite associé à ces derniers atteigne la valeur de consigne de décollage.

Ainsi, grâce à l'invention, tant que les moteurs de l'aéronef ne présentent pas, au moins à un instant donné d'une phase de décollage, une valeur du paramètre de conduite sensiblement identique (à savoir la valeur de consigne intermédiaire prédéterminée), le régime des moteurs ne peut dépasser le régime intermédiaire associé à ladite valeur de consigne intermédiaire. Avant de reprendre l'augmentation de régime pour atteindre le régime de décollage, la valeur du paramètre de conduite de chacun des moteurs doit être sensiblement égale à la valeur de consigne intermédiaire. Cela permet d'éliminer automatiquement une éventuelle non uniformité de la valeur du paramètre de conduite entre les moteurs, susceptible d'engendrer une dissymétrie de régime entre les moteurs, avant la reprise de la montée en régime. On prévient ainsi tout risque de déviation latérale importante de l'aéronef (occasionnée par une telle dissymétrie de régime) qui pourrait nécessiter une intervention des pilotes afin d'être corrigée. La charge de travail des pilotes est réduite, d'une part, parce que la commande du régime des moteurs est effectuée automatiquement au cours du décollage et, d'autre part, parce que l'invention rend quasi inexistant le risque de déviation latérale de l'aéronef lors du décollage.

Dans un mode de réalisation particulier conforme à l'invention :
- on déclenche une temporisation de durée prédéfinie à l'initiation du décollage ; et
- on émet une alerte à l'attention des pilotes de l'aéronef lorsque ladite différence associée à au moins un des moteurs reste supérieure audit seuil après l'expiration de ladite temporisation.

Ainsi, les pilotes peuvent décider d'interrompre le décollage s'ils l'estiment nécessaire après avoir été alertés.

En variante ou en complément, il est bien évident que l'on pourrait interrompre automatiquement le décollage, dans le cas où ladite différence associée à au moins un des moteurs resterait supérieure audit seuil après l'expiration d'une temporisation.

Par ailleurs, lorsque les moteurs sont des turboréacteurs, le paramètre de conduite associé aux moteurs peut être soit le rapport EPR entre les pressions des gaz à la sortie et à l'entrée des moteurs, soit la vitesse de rotation N1 de la soufflante des moteurs.

Toutefois, en lieu et place du paramètre de conduite N1 ou EPR, on peut mettre en oeuvre l'invention de façon semblable en utilisant un paramètre de poussée défini à partir de N1 et/ou de EPR.

De préférence, le décollage est initié lorsque les manettes de commande des gaz associées respectivement aux moteurs sont amenées dans une position correspondant au régime de décollage déterminé.

Ainsi, une fois les manettes de commande en position de décollage, les pilotes sont normalement dispensés de toute manipulation supplémentaire de celles-ci, au moins jusqu'à l'achèvement de la phase de décollage.

Avantageusement, l'étape de détection peut être effectuée en continu tout au long du décollage. On peut néanmoins mettre en oeuvre toute autre forme de détection appropriée, par exemple une détection à des intervalles réguliers prédéterminés.

Par ailleurs, la présente invention concerne également, conformément à la revendication 6, un dispositif de commande du régime des moteurs d'un aéronef multimoteur au cours d'un décollage comportant :
- des moyens pour recevoir au moins une valeur de consigne, commune à tous les moteurs et correspondant à une valeur particulière du paramètre de conduite ;
- des moyens pour mesurer, pour chacun desdits moteurs, la valeur courante du paramètre de conduite associée ; et
- des moyens (5) pour contrôler le régime des moteurs,
qui est remarquable :
- en ce que ladite valeur de consigne est une valeur de consigne intermédiaire strictement inférieure à une valeur de consigne de décollage correspondant à un régime de décollage prédéterminé ;
- en ce que ledit dispositif comporte des moyens pour détecter si, pour tous les moteurs, la différence entre la valeur courante du paramètre de conduite associée à chacun desdits moteurs et la valeur de consigne intermédiaire est, en valeur absolue, au plus égale à un seuil prédéfini ; et
- en ce que lesdits moyens de contrôle du régime des moteurs sont configurés pour :
   ■ recevoir un ordre représentatif dudit régime de décollage prédéterminé ;
   ■ augmenter, après l'initiation du décollage, le régime desdits moteurs depuis un régime de ralenti jusqu'à un régime intermédiaire correspondant à la valeur de consigne intermédiaire déterminée, de telle sorte que le paramètre de conduite associé à chacun des moteurs atteigne ladite valeur de consigne intermédiaire ; et
   ■ poursuivre l'augmentation du régime des moteurs jusqu'au régime de décollage prédéterminé, lorsque, pour tous les moteurs, ladite différence associée est au plus égale au seuil prédéfini, de telle sorte que le paramètre de conduite associé à ces derniers atteigne la valeur de consigne de décollage.

Dans une forme de réalisation conforme à l'invention, le dispositif de commande comprend :
- des moyens de temporisation aptes à déclencher, à l'initiation du décollage, une temporisation de durée prédéfinie ; et
- des moyens pour émettre une alerte à l'attention des pilotes de l'aéronef, lorsque ladite différence associée à au moins un des moteurs reste supérieure audit seuil jusqu'à l'expiration de ladite temporisation.

De plus, la présente invention concerne également un aéronef comportant un dispositif de commande tel que décrit ci-dessus.

Les figures du dessin annexé feront bien comprendre comment l'invention peut être réalisée. Sur ces figures, des références identiques désignent des éléments semblables.

La figure 1 est un schéma synoptique d'un dispositif, selon l'invention, pour la commande du régime des moteurs d'un avion quadrimoteur, représenté de dessus, lors d'une phase de décollage.

La figure 2 est un diagramme représentant l'évolution temporelle de la vitesse de rotation N1 des deux moteurs externes de l'avion de la figure 1, suivant le régime moteur appliqué à ces derniers au cours d'un décollage.

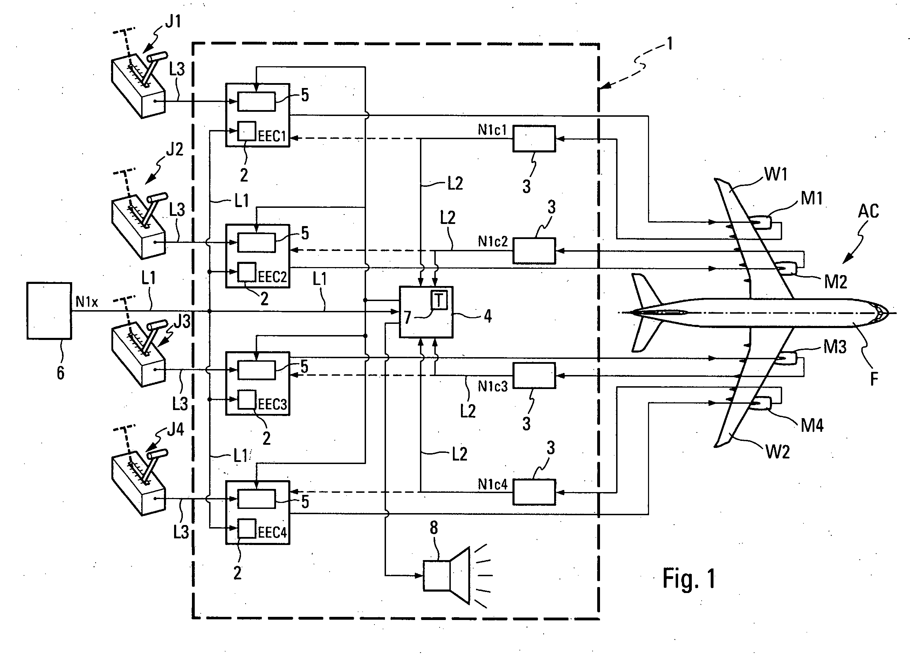

L'avion AC quadrimoteur, montré schématiquement du dessus sur la figure 1, comporte un fuselage F et deux ailes W1 et W2, symétriques par rapport audit fuselage F. L'aile W1 porte un moteur externe M1 et un moteur interne M2. De même, l'aile W2 porte un moteur interne M3 et un moteur externe M4.

Chaque moteur M1 à M4 est du type turboréacteur à double flux, mais l'invention n'est nullement limitée à cet exemple, comme rappelé précédemment.

Comme cela est illustré schématiquement sur la figure 1, le régime de chaque moteur M1 à M4 de l'avion AC peut être commandé par l'intermédiaire d'une manette de commande des gaz J1 à J4 spécifique qui peut occuper n'importe quelle position entre une position de régime maximal (représentée en pointillés) et une position de ralenti représentée en trait plein).

De façon usuelle, préalablement au décollage, les pilotes de l'avion AC déterminent les paramètres de décollage, et notamment le régime de décollage à appliquer (à savoir les régimes usuels FLEX ou TOGA), en fonction des caractéristiques de l'avion AC (modèle, masse à vide, charge, etc...), des dimensions et de l'état de la piste, des informations météorologiques, etc...

Au régime de décollage déterminé est associée une valeur de consigne de décollage N1d commune à tous les moteurs M1 à M4 et correspondant à une valeur particulière d'un paramètre de conduite desdits moteurs M1 à M4.

De façon également connue, le paramètre de conduite de chacun desdits moteurs M1 à M4 - paramètre qui est représentatif du niveau de poussée du moteur correspondant - est soit celui connu en aéronautique sous la désignation de EPR (Engine Pressure Ratio) et qui est égal au rapport entre la pression des gaz en sortie de la turbine et la pression des gaz dans le capot d'entrée d'air, soit celui connu sous l'appellation N1 et qui correspond à la vitesse de rotation de la soufflante desdits moteurs M1 à M4.

Dans la suite de la description, on considère uniquement le paramètre de conduite N1. Il va de soi que l'invention peut être mise en oeuvre de façon identique avec le paramètre EPR.

En outre, le régime de chacun des moteurs M1 à M4 est commandé, de façon connue, par un calculateur électronique de contrôle EEC1 à EEC4 (Electronic Engine Control). Ces calculateurs EEC1 à EEC4 associés aux moteurs M1 à M4 reçoivent chacun un ordre représentatif du régime moteur à appliquer, transmis par les manettes de commande des gaz J1 à J4 associées et correspondant à la position respective de celles-ci. Les calculateurs EEC1 à EEC4 calculent, notamment à partir de cet ordre reçu, le débit de carburant à adresser aux moteurs M1 à M4, respectivement.

Sur la figure 1, les manettes de commande des gaz J1 à J4 des moteurs M1 à M4 et les calculateurs EEC1 à EEC4 sont représentés extérieurs à l'avion AC, alors qu'ils sont, en réalité, montés à bord de celui-ci.

Selon l'invention, un dispositif 1 de commande automatique du régime des moteurs M1 à M4 de l'avion AC au cours d'un décollage est embarqué à bord de ce dernier. Il est également représenté à l'extérieur de l'avion AC pour des raisons de clarté.

Le dispositif de commande 1 de l'invention comporte :
- des moyens 2 pour recevoir une valeur de consigne intermédiaire N1x (par la liaison L1), préalablement déterminée, commune à tous les moteurs M1 à M4 et correspondant à une valeur particulière du paramètre de conduite N1. La valeur de consigne intermédiaire N1x est strictement inférieure à la valeur de consigne de décollage N1d (soit N1x<N1d). Par exemple, N1x peut être égale à 50% de N1d ;
- des moyens 3 pour mesurer en continu, pour chacun desdits moteurs M1 à M4, la valeur courante de N1. Par exemple, les moyens 3 peuvent comporter un ou plusieurs capteurs de vitesse de rotation pour donner la mesure N1c1 à N1c4 de la vitesse de rotation courante de la soufflante de chacun desdits moteurs M1 à M4, respectivement. Ces valeurs courantes N1c1 à N1c4 peuvent être affichées sur des écrans embarqués dans le cockpit de l'avion AC, pour être visualisables par les pilotes ; et
- des moyens 4 pour détecter si, pour tous les moteurs M1 à M4, la différence d1 à d4 entre la valeur courante N1c1 à N1c4 associée à chacun desdits moteurs et la valeur de consigne intermédiaire N1x est, en valeur absolue, au plus égale à un seuil prédéfini Th (par exemple 1% de N1x) (soit |N1cj- N1x| = dj avec j=1, 2, 3 ou 4, telle que dj<Th). Ces moyens 4 sont aptes à recevoir les valeurs courantes N1c1 à N1c4 et la valeur de consigne intermédiaire N1x, par les liaisons L1 et L2 ;

De plus, le dispositif de commande 1 comporte des moyens 5 pour contrôler le régime des moteurs M1 à M4, respectivement. Ces moyens 5 sont aptes à :
- recevoir l'ordre représentatif dudit régime de décollage prédéterminé transmis par les manettes de commande des gaz J1 à J4 correspondantes aux moteurs M1 à M4, par l'intermédiaire des liaisons L3 ;
- augmenter, après l'initiation du décollage, le régime des moteurs M1 à M4 depuis un régime de ralenti jusqu'à un régime intermédiaire correspondant à la valeur de consigne intermédiaire N1x, de telle sorte que le paramètre de conduite N1 associé à chacun des moteurs M1 à M4 atteigne N1x ;
- poursuivre l'augmentation du régime des moteurs M1 à M4 jusqu'au régime de décollage déterminé, lorsque, pour tous les moteurs M1 à M4, la différence d1 à d4 associée est au plus égale au seuil prédéfini Th, de telle sorte que le paramètre de conduite N1 associé à ces derniers atteigne N1d.

Autrement dit, tant qu'il existe au moins une des différences d1 à d4 strictement supérieure au seuil Th, les moyens de contrôle 5 maintiennent le régime des autres moteurs (pour lesquels la différence d1 à d4 associée est au plus égale au seuil Th) dans le régime intermédiaire. Il n'y a pas d'augmentation de régime pour atteindre le régime de décollage pour ces moteurs.

Dans une forme de réalisation particulière de l'invention représentée en figure 1, les moyens 2 et 5 associés à chacun des moteurs M1 à M4 du dispositif 1 peuvent être intégrés dans les calculateurs électroniques de contrôle EEC1 à EEC4, respectivement.

Selon l'invention, le dispositif de commande 1 est activé dès l'initiation du décollage, c'est-à-dire lorsque les manettes de commande des gaz J1 à J4 associées aux moteurs M1 à M4 sont amenées dans une position correspondant au régime de décollage déterminé. Ainsi, une fois les manettes J1 à J4 en position de décollage, aucune manipulation de celles-ci n'est ensuite indispensable (sauf éventuellement dans le cas d'une situation d'urgence) jusqu'à la fin de la phase de décollage (le dispositif 1 gérant automatiquement le régime des moteurs M1 à M4).

Néanmoins, des moyens de désactivation (non représentés sur les figures) du dispositif de commande 1 peuvent être prévus, afin que les pilotes puissent contrôler manuellement le décollage de l'avion AC, de façon usuelle.

Par ailleurs, selon l'invention, la valeur de consigne intermédiaire N1x est obtenue, préalablement au décollage, par l'intermédiaire de moyens de détermination 6 qui peuvent par exemple prendre la forme d'un ordinateur portable ou d'un simulateur numérique au sol, manipulés ou non par les pilotes. Les moyens 6 peuvent déterminer N1x à partir de données relatives aux caractéristiques de l'avion AC (modèle, masse à vide, charge, etc...), aux dimensions de la piste, aux informations météorologiques, etc...

Bien que les moyens de détermination 6 soient représentés à l'extérieur du dispositif de commande 1 , il va de soi qu'ils peuvent, en variante, être intégrés dans celui-ci. Une mise en oeuvre automatique des moyens 6 reste également possible.

Par ailleurs, le dispositif de commande 1 peut également comporter:
- des moyens 7 de temporisation aptes à déclencher, à l'initiation du décollage, une temporisation T de durée prédéfinie ; et
- des moyens 8 pour émettre une alerte à l'attention des pilotes de l'avion AC, lorsque la différence d1 à d4 associée à au moins un des moteurs M1 à M4 reste supérieure audit seuil Th jusqu'à l'expiration de la temporisation T. L'alerte peut être visuelle et/ou sonore et être diffusée, par exemple, à l'intérieur du cockpit de l'avion AC.

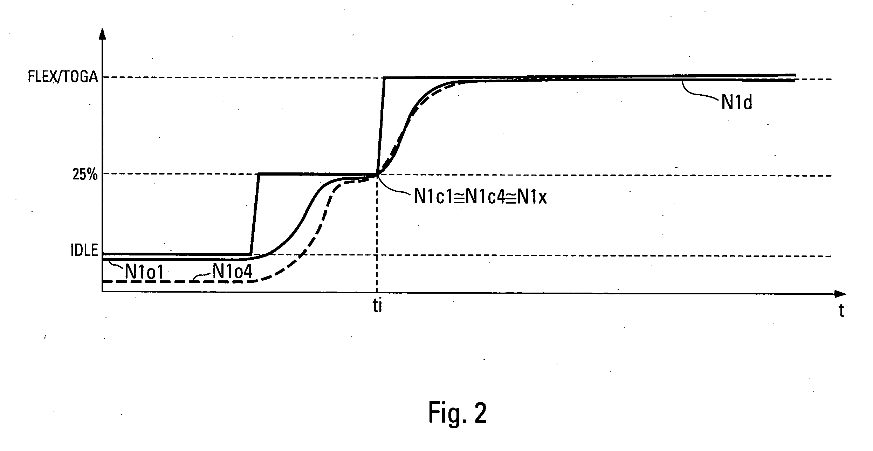

Par ailleurs, sur la figure 2, on a illustré, à titre d'exemple, un diagramme représentant l'évolution temporelle du paramètre N1 associé à chacun des deux moteurs externes M1 (en trait continu) et M4 (en trait discontinu) de l'avion AC (voir la figure 1) suivant le régime moteur appliqué au cours d'une phase de décollage.

Comme le montre la figure 2, bien que les moteurs M1 et M4 présentent, en régime de ralenti, des vitesses de rotation respectives N1o1 et N1o4 non identiques (du fait, par exemple, d'un calibrage du régime de ralenti différent), soit N1o1 >N1o4, celles-ci convergent, grâce à l'invention, vers une même valeur intermédiaire N1x (instant ti).

En effet, la soufflante de M1, dont la vitesse de rotation N1o1 est supérieure à celle N1o4 de la soufflante de M4, atteint plus rapidement la vitesse N1x. Toutefois, grâce à l'invention, elle reste maintenue à cette vitesse N1x (le régime de M1 est stabilisé au régime intermédiaire associé à N1x) tandis que la vitesse de la soufflante de M4 poursuit son accélération pour atteindre N1x. Une fois que cette dernière a également atteint N1x (instant ti), les soufflantes de M1 et M4 ont sensiblement la vitesse (à savoir N1x) et l'augmentation du régime de M1 et M4 peut alors se poursuivre pour parvenir au régime de décollage.

Comme illustré sur la figure 2, après la poursuite de l'augmentation du régime de M1 à M4 (instant ti) au-delà du régime intermédiaire, les vitesses des soufflantes de ces derniers restent sensiblement identiques jusqu'à ce qu'elles atteignent la valeur N1d. La différence de vitesse entre M1 et M4, existant préalablement à l'instant ti, a donc complètement disparu après cet instant (sans aucune intervention des pilotes), éliminant tout risque de dissymétrie de poussée en sortie des moteurs M1 et M4.

Par ailleurs, la présente invention peut également mettre en oeuvre, non pas une unique, mais deux ou plus valeurs de consigne intermédiaires N1x. Dans ce cas, la montée en régime des moteurs se fait par paliers successifs (il y a autant de paliers intermédiaires que de valeurs de consigne intermédiaires mises en oeuvre).

De plus, on pourrait également mettre en oeuvre l'invention de telle façon qu'elle ne s'applique qu'aux moteurs externes d'un avion quadrimoteur.

## Revendications

1. Procédé de commande du régime des moteurs (M1 à M4) d'un aéronef multimoteur (AC) au cours d'un décollage, dans lequel on détermine au préalable un régime de décollage (FLEX, TOGA) auquel est associée une valeur de consigne de décollage (N1d) commune à tous les moteurs et correspondant à une première valeur particulière d'un paramètre de conduite desdits moteurs (M1 à M4),
**caractérisé :**
- **en ce que** l'on détermine préalablement au moins une valeur de consigne intermédiaire (N1x) commune à tous les moteurs (M1 à M4) et correspondant à une seconde valeur particulière du paramètre de conduite, ladite valeur de consigne intermédiaire (N1x) étant strictement inférieure à la valeur de consigne de décollage (N1d) ; et
- **en ce que** l'on effectue automatiquement les étapes suivantes :
▪ à l'initiation du décollage, on augmente le régime desdits moteurs (M1 à M4) depuis un régime de ralenti (IDLE) jusqu'à un régime intermédiaire correspondant à la valeur de consigne intermédiaire déterminée (N1 x), de telle sorte que le paramètre de conduite associé à chacun des moteurs (M1 à M4) atteigne ladite valeur de consigne intermédiaire (N1x) ;
▪ on mesure, pour chacun desdits moteurs (M1 à M4), la valeur courante du paramètre de conduite associée (N1c1 à N1c4) ;
▪ on détecte si, pour tous les moteurs (M1 à M4), la différence (d1 à d4) entre la valeur courante du paramètre de conduite (N1c1 à N1 c4) associée à chacun desdits moteurs et la valeur de consigne intermédiaire déterminée (N1x) est, eh valeur absolue, au plus égale à un seuil prédéfini ; et
▪ lorsque, pour tous les moteurs (M1 à M4), ladite différence associée (d1 à d4) est au plus égale audit seuil prédéfini, on poursuit l'augmentation du régime des moteurs (M1 à M4) jusqu'au régime de décollage déterminé (FLEX, TOGA), de telle sorte que le paramètre de conduite associé à ces derniers atteigne la valeur de consigne de décollage (N1d).

2. Procédé selon la revendication 1,
**caractérisé :**
- **en ce que** l'on déclenche une temporisation (T) de durée prédéfinie à l'initiation du décollage ; et
- **en ce que** l'on émet une alerte à l'attention des pilotes de l'aéronef (AC) lorsque ladite différence associée (d1 à d4) à au moins un des moteurs reste supérieure audit seuil après l'expiration de ladite temporisation.

3. Procédé selon l'une des revendications 1 ou 2, dans lequel les moteurs (M1 à M4) sont des turboréacteurs,
**caractérisé en ce que** le paramètre de conduite associé aux moteurs (M1 à M4) est le rapport EPR entre les pressions des gaz à la sortie et à l'entrée des moteurs (M1 à M4) ou la vitesse de rotation N1 de la soufflante des moteurs (M1 à M4).

4. Procédé selon l'une des revendications 1 à 3,
**caractérisé en ce que** le décollage est initié lorsque les manettes de commande des gaz (J1 à J4) associées respectivement aux moteurs (M1 à M4) sont amenées dans une position correspondant au régime de décollage déterminé.

5. Procédé selon l'une des revendications 1 à 4,
**caractérisé en ce que** l'étape de détection est effectuée en continu tout au long du décollage.

6. Dispositif de commande du régime des moteurs (M1 à M4) d'un aéronef multimoteur (AC) au cours d'un décollage, qui comporte :
- des moyens (2) pour recevoir au moins une valeur de consigne (N1x), commune à tous les moteurs (M1 à M4) et correspondant à une valeur particulière du paramètre de conduite ;
- des moyens (3) pour mesurer, pour chacun desdits moteurs (M1 à M4), la valeur courante du paramètre de conduite associée (N1 c1 à N 1 c4) ; et
- des moyens (5) pour contrôler le régime des moteurs (M1 à M4), **caractérisé :**
- **en ce que** ladite valeur de consigne (N1 x) est une valeur de consigne intermédiaire strictement inférieure à une valeur de consigne de décollage (N1d) correspondant à un régime de décollage (FLEX, TOGA) prédéterminé ;
- **en ce que** ledit dispositif comporte des moyens (4) pour détecter si, pour tous les moteurs (M1 à M4), la différence (d1 à d4) entre la valeur courante du paramètre de conduite (N1c1 à N1c4) associée à chacun desdits moteurs et la valeur de consigne intermédiaire (N1x) est, en valeur absolue, au plus égale à un seuil prédéfini ; et
- **en ce que** lesdits moyens (5) de contrôle du régime des moteurs (M1 à M4) sont configurés pour :
▪ recevoir un ordre représentatif dudit régime de décollage (FLEX, TOGA) prédéterminé ;
▪ augmenter, après l'initiation du décollage, le régime desdits moteurs (M1 à M4) depuis un régime de ralenti (IDLE) jusqu'à un régime intermédiaire correspondant à la valeur de consigne intermédiaire déterminée (N1 x), de telle sorte que le paramètre de conduite associé à chacun des moteurs (M1 à M4) atteigne ladite valeur de consigne intermédiaire (N1 x) ; et
▪ poursuivre l'augmentation du régime des moteurs jusqu'au régime de décollage prédéterminé, lorsque, pour tous les moteurs (M1 à M4), ladite différence associée (d1 à d4) est au plus égale au seuil prédéfini, de telle sorte que le paramètre de conduite associé à ces derniers atteigne la valeur de consigne de décollage (N 1 d).

7. Dispositif selon la revendication 6,
**caractérisé en ce qu'**il comprend en outre :
- des moyens (7) de temporisation aptes à déclencher, à l'initiation du décollage, une temporisation (T) de durée prédéfinie ; et
- des moyens (8) pour émettre une alerte à l'attention des pilotes de l'aéronef, lorsque ladite différence associée (d1 à d4) à au moins un des moteurs reste supérieure audit seuil jusqu'à l'expiration de ladite temporisation (T).

8. Aéronef,
**caractérisé en ce qu'**il comporte un dispositif de commande (1) tel que spécifié sous l'une des revendications 6 ou 7.

## Patentansprüche

1. Verfahren für die Betriebssteuerung der Motoren (M1 bis M4) eines Mehrmotor-Luftfahrzeugs (AC) während einer Startphase, wobei zuvor ein Startbetrieb (FLEX, TOGA) bestimmt wird, dem ein allen Motoren gemeinsamer Startreferenzwert (N1d) zugeordnet ist, der einem ersten besonderen Wert eines Steuerparameters der Motoren (M1 bis M4) entspricht,
**dadurch gekennzeichnet:**
- **dass** zuvor mindestens ein allen Motoren (M1 bis M4) gemeinsamer Übergangs-Referenzwert (N1x) bestimmt wird, der einem zweiten besonderen Wert des Steuerparameters entspricht, wobei der Übergangs-Referenzwert (N1 x) kleiner als der Startreferenzwert (N1d) ist, und
- **dass** automatisch die folgenden Schritte durchgeführt werden:
▪ bei Einleitung der Startphase, Erhöhung des Betriebs der Motoren (M1 bis M4) von einem Leerlaufbetrieb (IDLE) in einen Übergangbetrieb, der dem bestimmten Übergangs-Referenzwert (N1x) entspricht, so dass der jedem der Motoren (M1 bis M4) zugeordnete Steuerparameter den Übergangs-Referenzwert (N1x) erreicht,
▪ Messen, für jeden der Motoren (M1 bis M4), des zugeordneten aktuellen Werts des Steuerparameters (N1c1 bis N1 c4),
▪ Ermitteln, ob für alle Motoren (M1 bis M4) die Differenz (d1 bis d4) zwischen dem jedem der Motoren zugeordneten aktuellen Wert des Steuerparameters (N1c1 bis N1c4) und dem bestimmten Übergangs-Referenzwert (N1x) in absolutem Wert höchsten gleich einem vorbestimmten Grenzwert ist, und
▪ wenn für alle Motoren (M1 bis M4) die zugeordnete Differenz (d1 bis d4) höchsten gleich dem vorbestimmten Grenzwert ist, Fortsetzen der Erhöhung des Betriebs der Motoren (M1 bis M4) bis zum vorbestimmten Startbetrieb (FLEX, TOGA), so dass der diesen Letztgenannten zugeordnete Steuerparameter den Startreferenzwert (N1d) erreicht.

2. Verfahren nach Anspruch 1,
**dadurch gekennzeichnet:**
- **dass** bei Einleitung der Startphase eine Verzögerung (T) vorbestimmter Dauer ausgelöst wird und
- **dass** eine Warnung an die Piloten des Luftfahrzeugs (AC) ausgegeben wird, wenn die mindestens einem der Motoren zugeordnete Differenz (d1 bis d4) nach Ablauf der Verzögerung über dem Grenzwert verbleibt.

3. Verfahren nach einem der Ansprüche 1 oder 2, wobei die Motoren (M1 bis M4) Turbotriebwerke sind,
**dadurch gekennzeichnet, dass** der den Motoren (M1 bis M4) zugeordnete Steuerparameter das Verhältnis EPR zwischen den Gasdrücken am Ausgang und am Eingang der Motoren (M1 bis M4) oder die Rotationsgeschwindigkeit N1 des Gebläses der Motoren (M1 bis M4) ist.

4. Verfahren nach einem der Ansprüche 1 bis 3,
**dadurch gekennzeichnet, dass** der Start eingeleitet wird, wenn die den Motoren (M1 bis M4) zugeordneten Gassteuerhebel (J1 bis J4) in eine Position geführt sind, die dem bestimmten Startbetrieb entsprechen.

5. Verfahren nach einem der Ansprüche 1 bis 4,
**dadurch gekennzeichnet, dass** der Ermittlungsschritt während der gesamten Startphase kontinuierlich durchgeführt wird.

6. Vorrichtung zur Betriebssteuerung der Motoren (M1 bis M4) eines Mehrmotor-Luftfahrzeugs (AC) beim Starten, die aufweist:
- Mittel (2), um mindestens einen allen Motoren (M1 bis M4) gemeinsamen Referenzwert (N1x) zu empfangen, der einem besonderen Wert des Steuerparameters entspricht,
- Mittel (3), um für jeden der Motoren (M1 bis M4) den zugeordneten aktuellen Wert des Steuerparameters (N1 c1 bis N1 c4) zu messen, und
- Mittel (5), um den Betrieb der Motoren (M1 bis M4) zu steuern,
**dadurch gekennzeichnet:**
- **dass** der Referenzwert (N1x) ein Übergangs-Referenzwert ist, der kleiner als ein Startreferenzwert (N1d) ist, der einem vorbestimmten Startbetrieb (FLEX, TOGA) entspricht,
- **dass** die Vorrichtung Mittel (4) aufweist, um festzustellen, ob für alle Motoren (M1 bis M4) die Differenz (d1 bis d4) zwischen dem jedem der Motoren zugeordneten aktuellen Wert des Steuerparameters (N1c1 bis N1c4) und dem bestimmten Übergangs-Referenzwert (N1x) in absolutem Wert höchsten gleich einem vorbestimmten Grenzwert ist, und
- **dass** die Steuermittel (5) des Betriebs der Motoren (M1 bis M4) konfiguriert sind, um:
▪ einen Befehl zu empfangen, der für den vorbestimmten Startbetrieb (FLEX, TOGA) repräsentativ ist;
▪ nach Einleitung des Starts den Betrieb der Motoren (M1 bis M4) ab einem Leerlaufbetrieb (IDLE) bis zu einem Übergangbetrieb, der einem bestimmten Übergangs-Referenzwert (N1x) entspricht, derart zu erhöhen, dass der jedem der Motoren (M1 bis M4) zugeordnete Steuerparameter den Übergangs-Referenzwert (N1x) erreicht, und
▪ die Erhöhung des Betriebs der Motoren bis zum vorbestimmten Startbetrieb fortzusetzen, wenn für alle Motoren (M1 bis M4) die zugeordnete Differenz (d1 bis d4) höchstens gleich dem vorbestimmten Grenzwert ist, so dass der diesen Letztgenannten zugeordnete Steuerparameters den Startreferenzwert (N1d) erreicht.

7. Vorrichtung nach Anspruch 6,
**dadurch gekennzeichnet, dass** sie ferner umfasst:
- Verzögerungsmittel (7), die imstande sind, beim Einleiten des Starts eine Verzögerung (T) mit einer vorbestimmten Dauer auszulösen und
- Mittel (8), um eine Warnung an die Piloten des Luftfahrzeugs auszugeben, wenn die mindestens einem der Motoren zugeordnete Differenz (d1 bis d4) nach Ablauf der Verzögerung (T) über dem Grenzwert verbleibt.

8. Luftfahrzeug,
**dadurch gekennzeichnet, dass** es eine Steuervorrichtung (1) nach einem der Ansprüche 6 oder 7 aufweist.

## Claims

1. A method for controlling the speed of the engines (M1 to M4) of a multi-engine aircraft (AC) upon a take-off, wherein, preliminarily a take-off speed (FLEX, TOGA) is determined, with which a take-off preset value (N1d) is associated, being common to all the engines and corresponding to a first particular value of a driving parameter of said engines (M1 to M4),
**characterized :**
- **in that** at least one intermediary preset value (N1x) is preliminarily determined, common to all the engines (M1 to M4) and corresponding to a second particular value of the driving parameter, said intermediary preset value (N1x) being strictly lower than the preset take-off value (N1d) ; and
- **in that** the following steps are automatically carried out:
▪ upon the initiation of the take-off, the speed of said engines (M1 to M4) is increased from an idling speed (IDLE) up to an intermediary speed corresponding to the determined intermediary preset value (N1x), so that the driving parameter associated with each one of the engines (M1 to M4) reaches said intermediary preset value (N1x) ;
▪ for each one of said engines (M1 to M4), the associated current value of the driving parameter (N1c1 to N1c4) is measured;
▪ it is detected whether, for all the engines (M1 to M4), the difference (d1 to d4) between the current value of the driving parameter (N1c1 to N1c4) associated with each one of said engines and the determined intermediary preset value (N1x) is, in absolute value, at the most equal to a predefined threshold; and
▪ when, for all the engines (M1 to M4), said associated difference (d1 to d4) is at the most equal to said predefined threshold, increasing the engine speed up to the determined take-off speed (FLEX, TOGA) is continued, so that the driving parameter associated with the latter reaches the preset take-off value (N1d).

2. The method according to claim 1,
**characterized :**
- **in that** a time-delay with a predefined duration (T) is triggered upon the initiation of the take-off; and
- **in that** a warning is emitted to the pilots of the aircraft (AC) when said difference (d1 to d4) associated with at least one of the engines remains higher than said threshold after said time-delay has expired.

3. The method according to one of claims 1 or 2, wherein the engines (M1 to M4) are turbojets,
characterized the driving parameter associated with the engines (M1 to M4) is the ratio EPR between the gas pressures at the outlet and at the inlet of the engines (M1 to M4), or the rotation speed N1 of the fan of the engines (M1 to M4).

4. The method according to one of claims 1 to 3,
characterized the take-off is initiated when the throttle levers (J1 to J4) respectively associated with the engines (M1 to M4) are brought in a position corresponding to the determined take-off speed.

5. The method according to one of claims 1 to 4,
characterized the detection step is carried out continuously during the whole take-off.

6. A device for controlling the speed of the engines (M1 to M4) of a multi-engine aircraft (AC) during a take-off, comprising:
- means (2) for receiving at least one preset value (N1x), common to all the engines (M1 to M4) and corresponding to a particular value of the driving parameter;
- means (3) for measuring, for each one of said engines (M1 to M4), the associated current value of the driving parameter (N1c1 to N1c4); and
- means (5) for controlling the engine speed (M1 to M4),
**characterized :**
- **in that** said preset value (N1x) is an intermediary preset value strictly lower than a take-off preset value (N1d) corresponding to a predetermined take-off speed (FLEX, TOGA);
- **in that** said device comprises means (4) for detecting whether, for all the engines (M1 to M4), the difference (d1 to d4) between the current value of the driving parameter (N1c1 to N1c4) associated with each one of said engines and the intermediary preset value (N1x) is, in absolute value, at the most equal to a predefined threshold; and
- **in that** said means (5) for controlling the engine speed are configured so as to:
▪ receive an order representative of said predetermined take-off speed (FLEX, TOGA);
▪ upon the initiation of the take-off, the speed of said engines (M1 to M4) is increased from an idling speed (IDLE) up to an intermediary speed corresponding to the determined intermediary preset value (N1x), so that the driving parameter associated with each one of the engines (M1 to M4) reaches said intermediary preset value (N1x); and
▪ continue the increase of the engines speed up to the predetermined take-off speed, when, for all the engines (M1 to M4), said associated difference (d1 to d4) is at the most equal to the predefined threshold, so that the driving parameter associated therewith reaches the take-off preset value (N1d).

7. The device according to claim 6,
**characterized in that** it further comprises:
- time-delay means (7) able to trigger, upon the initiation of the take-off, a time-delay (T) with a predefined duration; and
- means (8) for emitting a warning to the pilots of the aircraft, when said difference (d1 to d4) associated with at least one of the engines remains higher than said threshold after said time-delay (T) has expired.

8. An aircraft,
**characterized in that** it comprises a controlling device (1) such as specified in one of claims 6 or 7.
